(19) Europäisches Patentamt
European Patent Office
Office européen des brevets

(11) **EP 2 161 721 A1**

(12) **EUROPEAN PATENT APPLICATION**

(43) Date of publication:
**10.03.2010 Bulletin 2010/10**

(51) Int Cl.:
**G11B 7/007** *(2006.01)*  **G11B 7/013** *(2006.01)*
**G11B 7/09** *(2006.01)*  **G11B 7/26** *(2006.01)*

(21) Application number: **08305530.1**

(22) Date of filing: **05.09.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Thomson Licensing
92443 Issy-les-Moulineaux Cedex (FR)**

(72) Inventors:
• **Khrushchev, Sergey
78048 Villingen-Schwenningen (DE)**

• **Reschke, Uwe
70190 Stuttgart (DE)**
• **Kimmelmann, Stefan
78052 VS-Villingen (DE)**

(74) Representative: **Schmidt-Uhlig, Thomas
Deutsche Thomson OHG
European Patent Operations
Karl-Wiechert-Allee 74
30625 Hannover (DE)**

(54) **Compatible optical recording medium**

(57) The present invention relates to a format of a recordable optical recording medium (10), which is designed in such a way that it has the appearance of a read-only optical recording medium for most players and recorders, to a method for manufacturing the recordable optical recording medium (10), and to a method for writing to the optical recording medium (10). The optical recording medium (10) has a recording area (16) and a guide structure (15) for tracking. The guide structure (15) does only extend over one or a few track spirals or concentric tracks. For writing to this optical recording medium (10) a further light beam (31) falling onto the guide structure (15) is used for generating a tracking error signal for a main light beam (30) which is writing into the recording area (16).

Fig. 5

**Description**

The present invention relates to a format of a recordable optical recording medium, which has the appearance of a read-only optical recording medium for most players and recorders, and to a method and an apparatus for reading from and/or writing to the recordable optical recording medium.

The distribution of digital data such as movies or software on optical recording media today is established as the main distribution channel. However, this means that stores need to stock a large amount of titles in order to be able to provide most requested titles immediately to their customers without having to order them.

In order to reduce this need for a large stock several solutions for a manufacturing on demand or a distribution via networks have been proposed. The optical recording medium, typically a DVD (digital versatile disk), is recorded as soon as a title is requested by a customer. Recording is done with a special recorder provided in a store, with a kiosk type recording terminal, or by a special consumer recorder connected to a network. These special recorders allow to write data to a recordable DVD in such a way that the DVD has the appearance of a CSS-encrypted DVD-Video (ROM) disk, even though it is a specially finalized recordable DVD. For recording the optical recording medium has a groove structure to guide an optical pickup unit relative to the optical recording medium.

Apart from the above mentioned manufacturing on demand applications, there also exist a plurality of applications for pre-recorded optical recording media having at least some recording capabilities. For example, for serialization and authentication of pre-recorded optical recording media a recordable area is needed on pre-recorded optical recording media. The recordable area is used for adding a unique identifier to the pre-recorded medium after the stamping process at the manufacturing plant. Similarly, information stored on the pre-recorded medium can be used to replace a required software key, such as a serial number, which otherwise has to be input manually with a keyboard when installing the software. The information may also be used as an authentication key to unlock the content stored on the pre-recorded medium.

A further application of recordable areas on a pre-recorded medium is related to the so-called retail activation. According to this application an optical recording medium cannot be played back after manufacturing, e.g. because specific parts of the content are missing. Instead, the medium needs to be activated at the point of sale using a special recorder for making the necessary modifications to the medium, e.g. by adding the missing content.

In order to establish the above described solutions as further distribution channels, the recorded optical recording media have to be compatible with as many standard players and recorders as possible. While this is usually not a problem for players, the situation is different with recorders.

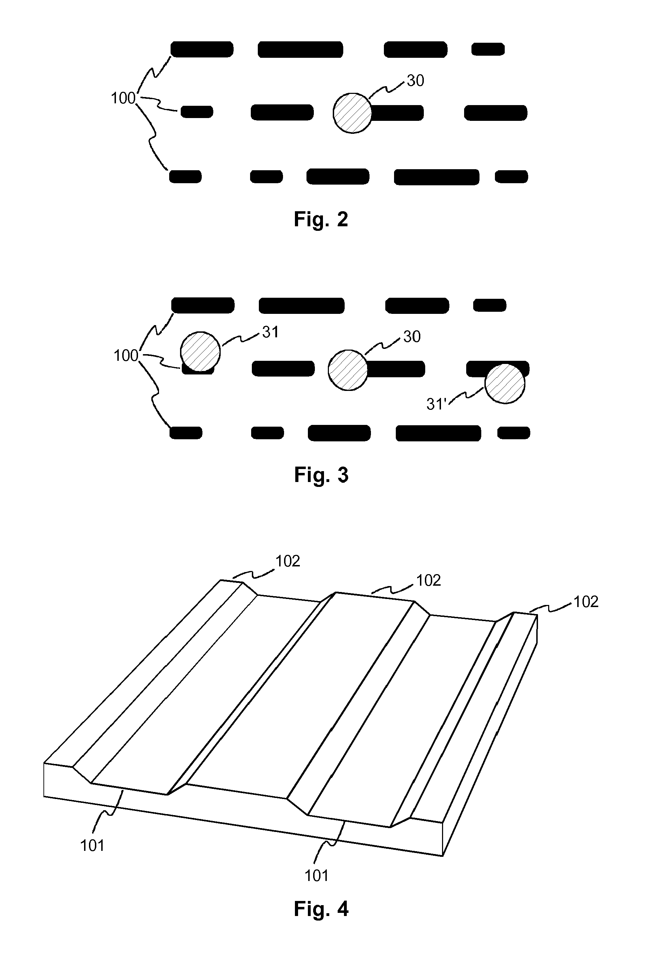

Several methods are known for detecting the position of the light spot on an optical recording medium. The two most popular are Differential-Phase-Detection (DPD, used for ROM formats) and radial Push-Pull (used for RE formats). However, those two methods require substrates having embossed features, i.e. pits for ROM formats or a land/groove structure for RE formats. A typical land/groove structure is depicted in Fig. 2. As a copy protection mechanism some optical pickups used in recorders do not allow to retrieve data from an optical recording medium indicated as a read-only medium when a push-pull signal originating from the land/groove structure is found, which is an indication of a recordable optical recording medium. Such incompatibilities have to be avoided.

In EP 1 933 313 a recordable optical recording medium with a specially designed land/groove structure is disclosed. The optical recording medium is recorded using a laser with a wavelength around 405 nm, whereas it is read using a laser with a wavelength around 650 nm. The specially designed land/groove structure allows to have a push-pull signal at 405 nm, but to have only a strongly reduced push-pull signal at 650 nm.

The solution proposed in the above document has the drawback that it is difficult to fulfill the DVD-ROM specification, because a new material needs to be used, which has a high absorption in the blue wavelength range and a high reflectivity in the red wavelength range. Also, a light source emitting a light beam in the blue wavelength range is necessary for recording. This means that the recording medium essentially needs to fulfill the tighter specifications regarding tilt, cover layer thickness, refractive index, etc., which are applicable to high data density recording media intended to be read with a light beam in the blue wavelength range. Finally, the recorded pit structure shows different properties in the blue wavelength range and in the red wavelength range. Therefore, the recorded medium needs to be checked after recording using a light beam in the red wavelength range.

It is an object of the invention to propose a further format for a recordable optical recording medium, which has the appearance of a read-only optical recording medium for most players and recorders.

According to the invention, this object is achieved by an optical recording medium with a recording area and a guide structure for tracking, wherein the guide structure does only extend over one or a few track spirals or concentric tracks.

The optical recording medium according to the invention has the advantage that it enables tracking without the need for embossed features over the complete recording area, e.g. pits or grooves. As a consequence the optical recording medium has the appearance of a read-only optical recording medium and is compatible with most players and recorders. At the same time known layer stacks can be used, which allow high speed recording. Furthermore, the optical recording medium does not need to fulfill any tighter specifications regarding tilt, cover layer thickness, refractive index, etc.

Advantageously, the optical recording medium is a DVD-like medium. The DVD today is a well established medium for transporting and providing audio-visual data such as movies. Many households are already equipped with the DVD players or recorders. Therefore, it is desirable to make use of the huge customer base also for manufacturing on demand and a distribution via networks. Also, the invention is applicable to any existing materials that are already used for the manufacturing of DVDs. The known DVD specifications concerning the recording speed and the mechanical media parameters are applicable. Of course, the invention is usable for any type of optical recording medium.

Preferably, the guide structure is located before or at the beginning of a lead in area or in an inner part of the recording area. This ensures that the optical recording medium is compatible with most players and recorders, as a push-pull signal originating from the guide structure, which is an indication of a recordable optical recording medium, is only present outside the recording area or in a very small fraction of the recording area.

Favorably, the guide structure is a land/groove structure or includes pre-recorded pits. In this way the guide structure is detectable using known tracking methods, such as push-pull tracking.

A method for writing to an optical recording medium according to the invention has the steps of:

- generating at least a main light beam and a further light beam coupled to the main light beam;
- illuminating the guide structure with the further light beam;
- generating a tracking error signal for the main light beam from a fraction of the further light beam reflected by the guide structure; and
- writing data to the optical recording medium with the main light beam.

According to the invention, a tracking error signal generated by a further light beam coupled to the main light beam is used for controlling the position of the main light beam. This is necessary as no guide structure is present at the location of the main light beam. In other words, based on at least one track of an initial guide structure the main light beam writes its own guide structure for later tracks. The further light beam advantageously is one of the side beams generated by a diffraction grating, a partial beam generated by a beam splitter, or a light beam generated by an additional light source.

Advantageously, the distance between the main light beam and the further light beam on the optical recording medium is an integer multiple of one track pitch. This ensures that after recording the distance between any two adjacent tracks is exactly one track pitch.

In order to implement the above writing method, an apparatus for writing to an optical recording medium according to the invention has:

- means for generating at least a main light beam and a further light beam coupled to the main light beam;
- means for illuminating a guide structure with the further light beam;
- means for generating a tracking error signal for the main light beam from a fraction of the further light beam reflected by the guide structure; and
- means for writing data to the optical recording medium with the main light beam.

The means for generating at least the main light beam and the further light beam preferably is a diffraction grating, a beam splitter or an additional light source. The apparatus has the advantage that it corresponds essentially to a standard pickup. Only the servo electronics and the detector for the further light beam need to be adapted, such that a tracking error signal for the main light beam is generated using the further light beam.

A method for manufacturing an optical recording medium according to the invention has the steps of:

- applying at least a recording layer on a substrate;
- applying at least a cover layer on the recording layer; and
- forming a guide structure for tracking, which does only extend over one or a few track spirals or concentric tracks.

In order to implement the above manufacturing method, an apparatus for manufacturing an optical recording medium has:

- means for applying at least a recording layer on a substrate;
- means for applying at least a cover layer on the recording layer; and
- means for forming a guide structure for tracking, which does only extend over one or a few track spirals or concentric tracks.

The recording layer is favorably applied by sputtering, spin coating or other known processes. Likewise, the cover layer is advantageously applied by spin coating or flooding or the like. The manufacturing method can easily be implemented by slightly modifying existing manufacturing solutions. It is sufficient to ensure that the guide structure for tracking only extends over one or a few track spirals or concentric tracks.

Advantageously, the guide structure is formed by molding before applying the cover layer or by recording a pit train before or after applying the cover layer.

Molding has the advantage that it does not need an additional manufacturing step, as it is a normal manufacturing step during the production of recordable media. It is sufficient to modify the mold in such way that the guide structure for tracking only extends over one or a few track spirals or concentric tracks. On the other hand, recording a pit train before or after applying the cover layer offers a greater freedom of modifying the manufacturing process for different types of recording media, as the properties of the recorded pit train can be adjusted by adapting the write strategy.

Favorably, the pit train is recorded using a tracking actuator by applying a voltage ramp to a tracking coil of the tracking actuator, which continuously increases during a revolution of the optical recording medium and which is chosen such that after a complete revolution of the optical recording medium the tracking actuator has shifted a recording light beam on the optical recording medium by the amount of the track pitch.

In this way it is ensured that after recording the distance between two tracks in the recording area is exactly one track pitch, so that the recorded medium fulfills the applicable specifications.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:

Fig. 1    schematically shows a pickup for reading from an optical recording medium;

Fig. 2    depicts the principle of differential phase detection tracking on a pre-recorded optical recording medium;

Fig. 3    depicts the principle of three-beam tracking on a pre-recorded optical recording medium;

Fig. 4    shows a land/groove structure of a known recordable optical recording medium;

Fig. 5    illustrates a top view of an optical recording medium according to the invention;

Fig. 6    shows a cross section of the optical recording medium of Fig. 5;

Fig. 7    shows the voltage applied to a tracking actuator for generating a track spiral on the optical recording medium according to the invention;

Fig. 8    depicts the pickup of Fig. 1 when scanning the optical recording medium according to the invention;

Fig. 9    shows the surface of a pre-recorded optical recording medium having a recordable area; and

Fig. 10    shows the surface of a further pre-recorded optical recording medium having a recordable area.

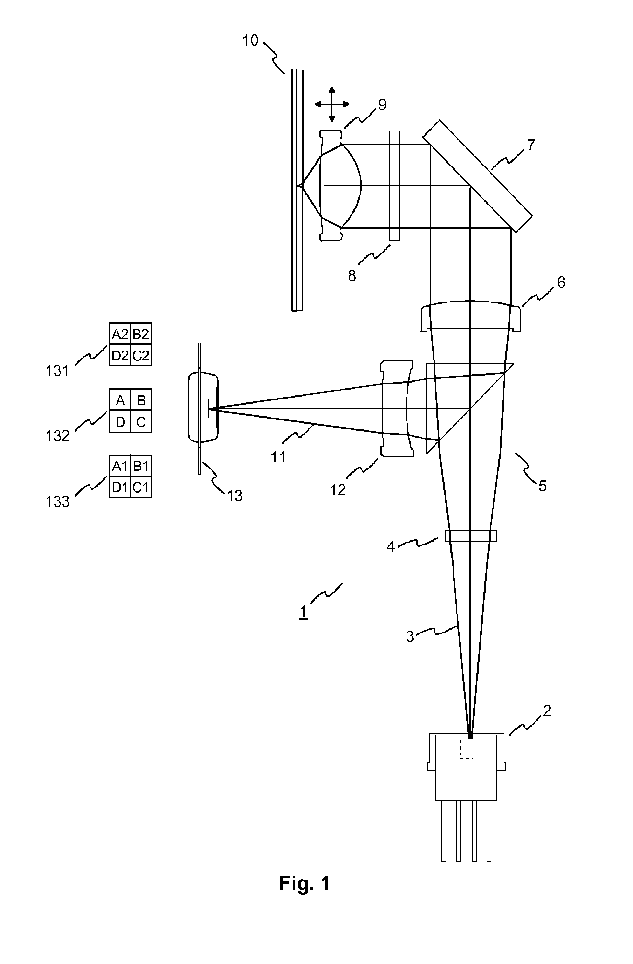

In Fig. 1 a pickup 1 for reading from an optical recording medium 10 is shown schematically. A laser diode 2 emits a linearly polarized light beam 3, which passes through a diffraction grating 4. The diffraction grating 4 generates two first order side beams (not shown) in addition to the zeroth order main light beam 3. The side beams are used for three-beam tracking. The main light beam 3 and the side beams light beams pass through a polarization beam splitter cube 5 and are collimated by a collimator lens 6. A mirror 7 directs the collimated light beams towards a quarter wave plate 8, which transforms the light beams 3 into circular polarized light beams. An objective lens 9 finally focuses the light beams onto an optical recording medium 10. The light beams 11 reflected by the optical recording medium 10 are collimated by the objective lens 9 and pass through the quarter wave plate 8, which transforms the reflected light beams 11 into linear polarized light beam 11. Due to the quarter wave plate 8, the direction of polarization of the reflected light beams 11 is perpendicular to the direction of polarization of the initial light beams. The reflected light beams 11 are thus deflected by the polarization beam splitter cube 5 towards a focusing lens 12, which focuses the reflected light beam 11 onto a detector 13. The detector 13 has a plurality of detection areas 131, 132, 133 for generating tracking and focus error signals in addition to a data signal.

Fig. 2 shows a typical structure of a pre-recorded optical recording medium. As can be seen, the pre-recorded optical recording medium has a plurality of data tracks 100 formed by pre-recorded pits. For such a structure usually the so called differential phase detection (DPD) tracking method is used. A single light spot 30 scanning one of the tracks 100 is needed for this purpose.

In contrast, the three-beam tracking method makes use of three light spots 30, 31, 31' falling onto three adjacent tracks. This is illustrated schematically in Fig. 3. A main light beam 30 is located on a track 100. Two side beams 31, 31' are arranged shifted with respect to the main light beam 30 such that they only fall partly on the track 100 scanned by the main light beam 30. The reflected side beams 31, 31' are detected by separate detector elements of the photo detector 13. As the reflectivity of the tracks 100 is different from the reflectivity of the areas between the tracks 100, any displacement of the side beams 31, 31' relative to the track 100 manifests itself as a change of the intensity detected by the separate detector elements of the photo detector 13. This change of intensity is used for tracking.

In case of recordable optical recording media, no pre-recorded pits are present. In order to enable tracking, a land/groove structure is usually provided in the recording layer. Fig. 4 shows such a land/groove structure of a known recordable optical recording medium 10.

As can be seen, a plurality of grooves 101 are arranged between the lands 102.

In the following the invention is explained with reference to a DVD-like optical recording medium, which is read with a wavelength around 650nm. Of course, the general idea of the invention is also applicable to other types of optical recording media.

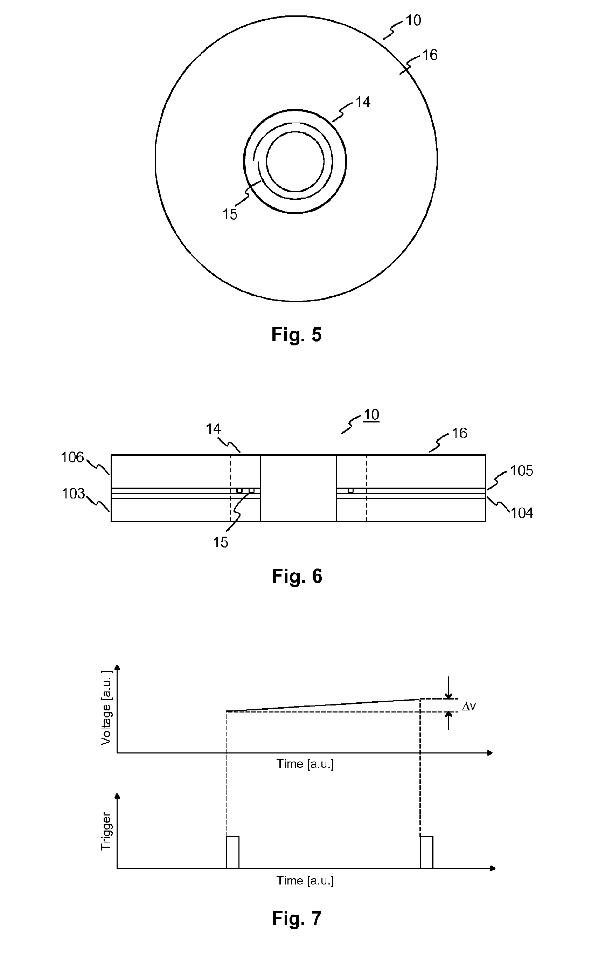

In Fig. 5 a top view of an optical recording medium 10 according to the invention is illustrated schematically. The optical recording medium has a specially molded guide structure 15 consisting of molded pits or grooves. The guide structure 15 preferably extends over one or some complete track spirals or concentric tracks. Advantageously, the guide structure 15 is located before or at the beginning of the Lead-in area 14 or in the inner part of the recording area 16. The remaining part of the recording area 16 does not have any guide structure 15.

Apart from molding the guide structure 15 during the manufacturing process, it is likewise possible to use a recording process for producing the guide structure 15. In this case a precise recorder is used for recording a pit train. During recording, a continuously increasing ramping voltage is applied to the tracking actuator. The ramping voltage is chosen such that after a complete revolution of the optical recording medium 10 the tracking actuator has shifted the recording light beam on the optical recording medium 10 by exactly the amount of the track pitch. Alternatively, a precise movement of a recording pickup is performed during recording of the pit train. In this case instead of moving only the tracking actuator the whole pickup is moved.

Fig. 6 shows a cross section of the optical recording medium 10 of Fig. 5. The optical recording medium 10 has a substrate 103, a reflective layer 104, a recording layer 105 and a cover layer 106. Of course, additional layers may be provided if necessary. Also, the reflective layer 104 may be part of the recording layer 105. As can be seen, the guide structure 15 only extends over one or some complete track spirals or concentric tracks.

In the upper part of Fig. 7 such a ramping voltage is depicted. The lower part of Fig. 7 illustrates a trigger signal indicating the start of a new revolution of the optical recording medium. The voltage difference $\Delta v$ at the end of one revolution is given by the desired track pitch and the actuator sensitivity as $\Delta v$ = Track pitch / Actuator sensitivity.

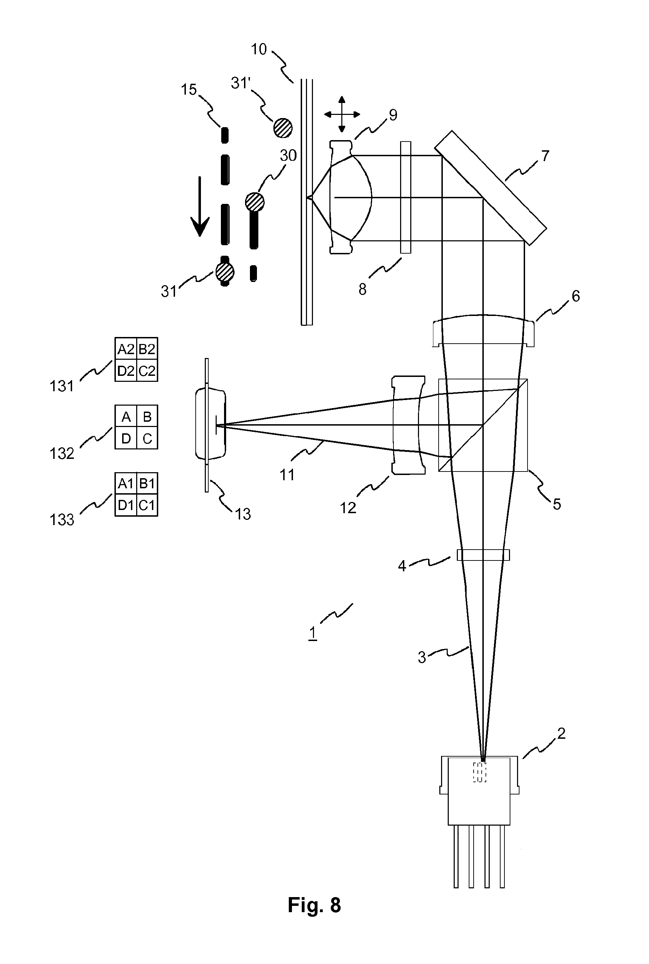

Fig. 8 shows a pickup 1 according to the invention during scanning of the optical recording medium 10 of Fig. 5. The pickup 1 corresponds essentially to the pickup 1 of Fig. 1. However, for tracking the pickup 1 uses a combination of three-beam tracking and DPD tracking. In order to prevent recording by the side beams 31, 31', the grating 4 has an aspect ratio that ensures that the intensity of the side beams 31, 31' is too small for recording, e.g. I1:I0=1:17, where I1 and I0 are the intensities of the side beams 31, 31' and the main light beam 30, respectively. The grating 4 is adjusted in such way that the distance between the main light beam 30 and the side beams 31, 31' on the optical recording medium 10 is exactly one track pitch, i.e. 0.74 $\mu$m in case of DVD. It may likewise be an integer multiple of one track pitch. Assume that the left side beam 31 of Fig. 7 falls on the detectors A1-D1 and the right side beam 31' of Fig. 8 falls on the detectors A2-D2. As the right side beam 31' is moving on the mirror surface of the optical recording medium 10, the sum signal of the detectors A2-D2 can be used for normalizing. The left side beam 31 impinges on the guide structure 15 or on already recorded pits and is used for generating the tracking signal as follows:

$$ DPD = \Delta \varphi \left\{ \frac{A_1 + C_1}{A_2 + C_2} \; and \; \frac{B_1 + D_1}{B_2 + D_2} \right\} . $$

In other words, during the recording of data the invention makes use of the already recorded data for tracking as no land/groove structure is present.

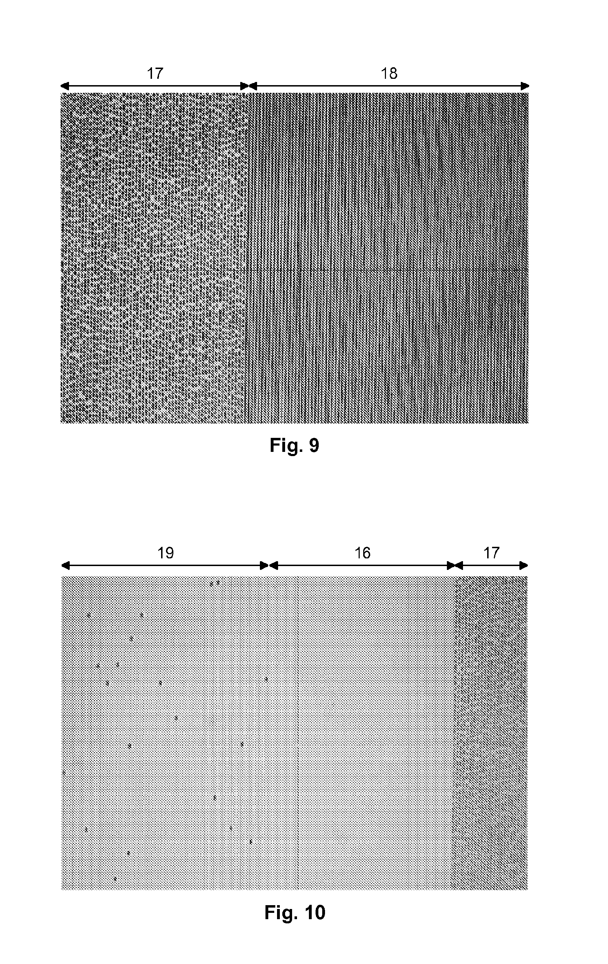

A photograph of the surface of a known prerecorded DVD-like optical recording medium having an additional recordable area 18 is shown in Fig. 9. A first area 17 contains pre-recorded data in the form of pits. A recordable second area 18 has a land/groove structure to enable tracking during a recording process. This prerecorded medium has the drawback that is not fully compatible with existing recorders, as some recorders refuse playback due to the land/groove structure.

A photograph of the surface of an optical recording medium according to the invention having a prerecorded area 17 as well as a recordable area 16 is shown in Fig. 10. The recordable area 16 does not have any tracking structure. Instead, the pre-recorded data of the pre-recorded area 17 or already recorded data of the recordable area 16 are used for tracking. In the figure, an additional recordable area 19 is shown. This area includes a special tracking structure that is used when recording with a wavelength of 405nm.

**Claims**

1. Optical recording medium (10) with a recording area (16) and a guide structure (15) for tracking, **characterized in that** the guide structure (15) does only extend over one or a few track spirals or concentric tracks.

2. Optical recording medium according to claim 1, **wherein** the guide structure (15) is located before or at the beginning of a lead in area (14) or in an inner part of the recording area (16).

3. Optical recording medium according to claim 1 or 2, **wherein** the guide structure (15) is a land/groove structure or includes pre-recorded pits.

4. Method for manufacturing an optical recording medium (10), **having** the steps of:

   - applying at least a recording layer (105) on a substrate (103);
   - applying at least a cover layer (106) on the recording layer (105); and
   - forming a guide structure (15) for tracking, which does only extend over one or a few track spirals or concentric tracks.

5. Method according to claim 4, **wherein** the guide structure (15) is formed before or at the beginning of a lead in area (14) or in an inner part of the recording area (16).

6. Method according to claim 4 or 5, **wherein** the guide structure (15) is formed by molding before applying the cover layer (106) or by recording a pit train before or after applying the cover layer (106).

7. Method according to claim 6, **wherein** the pit train is recorded using a tracking actuator by applying a voltage ramp to a tracking coil of the tracking actuator, which continuously increases during a revolution of the optical recording medium (10) and which is chosen such that after a complete revolution of the optical recording medium (10) the tracking actuator has shifted a recording light beam on the optical recording medium (10) by the amount of the track pitch.

8. Apparatus for manufacturing an optical recording medium (10), **having:**

   - means for applying at least a recording layer (105) on a substrate (103);
   - means for applying at least a cover layer (106) on the recording layer (105); and
   - means for forming a guide structure (15) for tracking, which does only extend over one or a few track spirals or concentric tracks.

9. Apparatus according to claim 8, **wherein** the means for forming the guide structure (15) is a molding means for molding the guide structure (15) before applying the cover layer (106), or a recorder for recording a pit train before or after applying the cover layer (106).

10. Method for writing to an optical recording medium (10), **having** the steps of:

    - generating at least a main light beam (30) and a further light beam (31) coupled to the main light beam (30);
    - illuminating a guide structure (15) with the further light beam (31);
    - generating a tracking error signal for the main light beam (30) from a fraction of the further light beam (31) reflected by the guide structure (15); and
    - writing data to the optical recording medium (10) with the main light beam (30).

11. Method according to claim 10, **wherein** a distance between the main light beam (30) and the further light beam (31) on the optical recording medium (10) is an integer multiple of one track pitch.

12. Apparatus for writing to an optical recording medium (10), **having:**

    - means (2, 4) for generating at least a main light beam (30) and a further light beam (31) coupled to the main light beam (30);
    - means (9) for illuminating a guide structure (15) with the further light beam (31);
    - means (131, 133) for generating a tracking error signal for the main light beam (30) from a fraction of the further light beam (31) reflected by the guide structure (15); and
    - means (2, 9) for writing data to the optical recording medium (10) with the main light beam (30).

13. Apparatus according to claim 12, **wherein** a distance between the main light beam (30) and the further light beam (31) on the optical recording medium (10) is an integer multiple of one track pitch.

14. Mold for an apparatus for manufacturing an optical recording medium (10), **characterized in that** it has a guide structure (15) for tracking, which does only extend over one or a few track spirals or concentric tracks.

**Fig. 1**

**Fig. 2**

**Fig. 3**

**Fig. 4**

**Fig. 5**

**Fig. 6**

**Fig. 7**

**Fig. 8**

17    18

Fig. 9

19    16    17

Fig. 10

Europäisches
Patentamt

European
Patent Office

Office européen
des brevets

# EUROPEAN SEARCH REPORT

**Application Number**

EP 08 30 5530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 507 763 A (KATO KIICHI [JP]) 26 March 1985 (1985-03-26) * column 4, line 37 - column 6, line 54; figures 3-7 * * column 7, line 62 - column 8, line 31 * * column 9, lines 1-28 * * abstract * ----- | 1-14 | INV. G11B7/007 G11B7/013 G11B7/09 G11B7/26 |
| A | EP 0 745 978 A (NIPPON CONLUX CO LTD [JP]) 4 December 1996 (1996-12-04) * abstract; claim 3 * ----- | 1-3, 10-13 | |

**TECHNICAL FIELDS SEARCHED (IPC)**

G11B

The present search report has been drawn up for all claims

| Place of search | Date of completion of the search | Examiner |
|---|---|---|
| Munich | 19 March 2009 | Lehnberg, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 161 721 A1**

## ANNEX TO THE EUROPEAN SEARCH REPORT
## ON EUROPEAN PATENT APPLICATION NO.

EP 08 30 5530

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2009

| Patent document cited in search report | | Publication date | Patent family member(s) | | Publication date |
|---|---|---|---|---|---|
| US 4507763 | A | 26-03-1985 | JP | 1684181 C | 31-07-1992 |
| | | | JP | 3045456 B | 11-07-1991 |
| | | | JP | 57130240 A | 12-08-1982 |
| EP 0745978 | A | 04-12-1996 | AU | 689038 B2 | 19-03-1998 |
| | | | AU | 5453396 A | 19-12-1996 |
| | | | CA | 2177546 A1 | 01-12-1996 |
| | | | CN | 1142106 A | 05-02-1997 |
| | | | DE | 69620051 D1 | 02-05-2002 |
| | | | DE | 69620051 T2 | 07-11-2002 |
| | | | JP | 8329492 A | 13-12-1996 |
| | | | US | 5936920 A | 10-08-1999 |

EPO FORM P0459

For more details about this annex : see Official Journal of the European Patent Office, No. 12/82

13

**EP 2 161 721 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1933313 A